## Europäisches Patentamt
## European Patent Office
## Office européen des brevets

(19)

(11) Veröffentlichungsnummer : **0 104 609**
**B1**

(12) **EUROPÄISCHE PATENTSCHRIFT**

(45) Veröffentlichungstag der Patentschrift : 03.12.86

(21) Anmeldenummer : 83109423.0

(22) Anmeldetag : 22.09.83

(51) Int. Cl.⁴ : **C 08 G 65/20**, C 08 G 65/10

(54) Verfahren zur Herstellung von Polyoxybutylen-polyoxyalkylenglykolcarbonsäurediester.

(30) Priorität : 01.10.82 DE 3236432

(43) Veröffentlichungstag der Anmeldung : 04.04.84 Patentblatt 84/14

(45) Bekanntmachung des Hinweises auf die Patenterteilung : 03.12.86 Patentblatt 86/49

(84) Benannte Vertragsstaaten : BE DE FR GB IT NL

(56) Entgegenhaltungen :
EP-A- 0 003 112
US-A- 4 127 513
US-A- 4 329 445

(73) Patentinhaber : BASF Aktiengesellschaft
Carl-Bosch-Strasse 38
D-6700 Ludwigshafen (DE)

(72) Erfinder : Mueller, Herbert, Dr.
Carostrasse 53
D-6710 Frankenthal (DE)

Jouve, 18, rue St-Denis, 75001 Paris, France

EP 0 104 609 B1

**Beschreibung**

Die Verwendung von Bleicherde zur Vorbehandlung und Polymerisation von Tetrahydrofuran ist bekannt.

Nach Angaben der EP-OS 3112 (US 4 189 566) werden Polyoxybutylenglykolcarbonsäurediester durch katalytische Polymerisation von vorbehandeltem Tetrahydrofuran in Gegenwart von Carbonsäureanhydrid und im wesentlichen wasserfreier Bleicherde als Katalysator in guten Ausbeuten hergestellt. Nachteilig an diesem Verfahren ist lediglich, daß die Reaktionsgeschwindigkeit verhältnismäßig klein ist.

Die US-PSen 4 127 513 und 4 228 272 vermitteln ferner die Lehre, daß unter Verwendung eines speziellen säureaktivierten Montmorillonit mit einem Porenvolumen von 0,4 bis 0,8 m³/g, einer Oberfläche von 220 bis 260 m²/g und einem durchschnittlichen Porendurchmesser von 0,1 bis 0,3 Mikrometer in Gegenwart von z. B. Wasser als Reglersubstanz Alkylenoxide und Tetrahydrofuran copolymerisiert werden können. Durch Anwendung dieser speziellen Montmorillonite können die sich bei der Copolymerisation als Nebenprodukte bildenden cyclischen Oligomeren auf einen Anteil von 4 bis 8 Gew.% gegenüber sonst üblichen 10 bis 15 Gew.% gesenkt werden. Dieser Gehalt ist jedoch immer noch zu hoch, um die erhaltenen Glykole für anspruchsvolle Anwendungen auf dem Polyurethangebiet einsetzen zu können. Die cyclischen Oligomeren sind ein inertes Material, das keine mit Isocyanatgruppen reagierende Hydroxylgruppen besitzt. Da die cyclischen Oligomeren in allen üblichen Lösungsmitteln sehr leicht löslich sind, können durch sie Verarbeitungsschwierigkeiten hervorgerufen oder die mechanischen Eigenschaften der Fertigprodukte nachteilig beeinflußt werden.

Aufgabe der vorliegenden Erfindung war es, Copolymere aus Tetrahydrofuran und 1,2-Alkylenoxiden herzustellen, die im wesentlichen keine linearen und insbesondere cyclischen Oligomeren enthalten und dadurch auch nicht zu den obengenannten Schwierigkeiten führen können.

Diese Aufgabe konnte überraschenderweise gelöst werden durch ein Verfahren zur Herstellung von Polyoxybutylen-polyoxyalkylenglykolcarbonsäurediester durch katalytische Copolymerisation von Tetrahydrofuran mit mindestens einem 1,2-Alkylenoxid, das dadurch gekennzeichnet ist, daß man die Copolymerisation in Gegenwart von Carbonsäureanhydrid mit Bleicherde mit einem Wassergehalt von weniger als 3 Gew.% als Katalysator durchführt.

Die nach dem erfindungsgemäßen Verfahren hergestellten Polyoxybutylen-polyoxyalkylenglykolcarbonsäurediester können durch Umesterung oder Verseifung der endständigen Estergruppen sehr leicht in die entsprechenden Glykole übergeführt werden.

Es war überraschend und aufgrund des bekannten Standes der Technik keineswegs zu erwarten, daß die Copolymerisation so eindeutig im Sinne des erfindungsgemäßen Verfahrens abläuft. So ist beispielsweise aus Houben-Weyl, Methoden der organischen Chemie, Band 6/3, Seite 482, (Georg-Thieme-Verlag, Stuttgart 1965) bekannt, daß 1,2-Alkylenoxide und Carbonsäureanhydride sich sehr leicht und mit hoher Geschwindigkeit, insbesondere in Gegenwart von Katalysatoren, zu Dicarbonsäureestern von 1,2-Diolen umsetzen. Wie bereits dargelegt wurde, verläuft hingegen die Polymerisation von Tetrahydrofuran in Gegenwart von Bleicherde und Carbonsäureanhydriden zu Polyoxybutylenglykolcarbonsäurediester verhätnismäßig langsam. Es mußte daher angenommen werden, daß die beiden Reaktionen, nämlich die Bildung von 1,2-Diolcarbonsäurediester aus 1,2-Alkylenoxid und Carbonsäureanhydrid und die Tetrahydrofuran-polymerisation, nebeneinander ablaufen und keine Copolymerisation eintritt.

Da die genannten US-Patentschriften und die GB-PS 854 958 ferner die Lehre vermitteln, daß die Copolymerisation von Alkylenoxiden und Tetrahydrofuran mit Bleicherde als Katalysator nur in Gegenwart von Verbindungen mit reaktiven Wasserstoffatomen durchgeführt werden kann, bedurfte es zur Durchführung des erfindungsgemäßen Verfahrens der Überwindung eines erheblichen Vorurteils.

Das erfindungsgemäße Verfahren weist den Vorteil auf, daß ·bei der Copolymerisation praktisch keine Nebenprodukte, insbesondere keine cyclische Oligomere gebildet werden und die Reaktion zu einem vollständigen Umsatz des 1,2-Alkylenoxids führt. Die erhaltenen Copolymerisate besitzen eine äußerst niedrige Farbzahl, was sich sehr günstig auf die weitere Verarbeitung auswirkt. Die als Katalysator verwendeten Bleicherden haben eine extrem lange Lebensdauer und lassen sich ohne großen Aufwand von den Polyoxybutylen-polyoxyalkylenglykolcarbonsäurediestern abtrennen.

Zu den für das erfindungsgemäße Verfahren verwendbaren Ausgangskomponenten ist folgendes auszuführen :

Als Monomere 1,2-Alkylenoxide und Tetrahydrofuran werden vorteilhafterweise wasserfreie oder zumindest solche verwendet, bei denen der Wassergehalt kleiner als 0,2 Gew.%, vorzugsweise kleiner als 0,1 Gew.% ist.

Als 1,2-Alkylenoxide kommen unsubstituierte oder substituierte, beispielsweise mit linearen oder verzweigten Alkylgruppen mit 1 bis 6, vorzugsweise 1 bis 2 C-Atomen, einem Phenylrest, mit Alkyl- und/oder Alkoxygruppen mit 1 bis 2 C-Atomen oder Halogenatomen substituierte Phenylreste oder mit Halogenatomen, vorzugsweise Chloratomen, substituierte in Betracht. Im einzelnen seien beispielhaft genannt : 1,2-Butylenoxid, 2,3-Butylenoxid, Styroloxid, Epichlorhydrin und vorzugsweise Ethylenoxid und 1,2-Propylenoxid. Die 1,2-Alkylenoxide können einzeln oder in Form von Mischungen, beispielsweise als Ethy-

lenoxid-1,2-Propylenoxid-Mischungen, Anwendung finden.

Das zur Copolymerisation verwendete Tetrahydrofuran wird zweckmäßigerweise vor der Polymerisation mit starken Mineralsäuren, organischen Sulfonsäuren, Silikagel und vorzugsweise Bleicherden nach dem in der EP-OS 3 112 beschriebenen Verfahren vorbehandelt.

Nach dem erfindungsgemäßen Verfahren wird die Copolymerisation in Gegenwart von organischen Carbonsäureanhydriden als Promotor durchgeführt. Vorteilhafterweise verwendet man solche Carbonsäureanhydride, die sich von aliphatischen oder aromatischen, Poly- und/oder vorzugsweise Monocarbonsäuren mit 2 bis 12, vorzugsweise 2 bis 8 Kohlenstoffatomen ableiten. Genannt seien beispielsweise Anhydride von aliphatischen Carbonsäuren mit 2 bis 12 Kohlenstoffatomen, die gegebenenfalls auch olefinisch ungesättigte Bindungen enthalten können, wie Buttersäureanhydrid, Valeriansäureanhydrid, Capronsäureanhydrid, Caprylsäureanhydrid, Pelargonsäureanhydrid, Acrylsäureanhydrid und vorzugsweise Propionsäureanhydrid und Essigsäureanhydrid, Anhydride von aromatischen und aliphatischen Polycarbonsäuren, insbesondere Dicarbonsäuren, wie Phthalsäureanhydrid, Naphthalinsäureanhydrid und vorzugsweise Bernsteinsäure- und Maleinsäureanhydrid. Da die erfindungsgemäß hergestellten Polyoxybutylen-polyoxyalkylenglykolcarbonsäurediester für die meisten Anwendungen in die entsprechenden Glykole übergeführt werden, verwendet man in der Praxis vorzugsweise Carbonsäureanhydride mit einer niederen Zahl an C-Atomen. Aus Preisgründen und Gründen der leichten Zugänglichkeit wird Acetanhydrid bevorzugt. Selbstverständlich sind auch gemischte Anhydride und Mischungen der oben genannten Anhydride verwendbar.

Bleicherden werden z. B. beschrieben in Ullmann's Enzyklopädie der technischen Chemie, 3. Auflage, Band IV, Seiten 541 bis 545. Als Katalysatoren geeignete natürliche oder synthetische Bleicherden sind insbesondere Aluminiumhydrosilikate oder Aluminium-Magnesiumhydrosilikate vom Typ des Montmorrillonits, die durch Säure aktiviert sein können und z. B. unter dem Namen « Tonsil »® im Handel sind. Synthetische Bleicherden werden z. B. in der GB-PS 854 958 beschrieben. Zur Herstellung der erfindungsgemäß verwendbaren, im wesentlichen wasserfreien Bleicherden werden handelsübliche wasserhaltige Bleicherden bei Temperaturen von 100 bis 200 °C, vorzugsweise von 110 bis 150 °C, in 1 bis 8 Stunden, vorzugsweise 2 bis 4 Stunden, bei Normaldruck oder vorzugsweise unter vermindertem Druck entwässert. Die erfindungsgemäß als Katalysatoren verwendbaren, im wesentlichen wasserfreien Bleicherden besitzen Wassergehalte von weniger als 3 Gew.%, vorzugsweise von 0,001 bis 1,5 Gew.%, und insbesondere von 0,1 bis 1,0 Gew.%. Für die Copolymerisation des Tetrahydrofurans und der 1,2-Alkylenoxide werden nur geringe Mengen der im wesentlichen wasserfreien Bleicherden benötigt. Die Copolymerisation kann mit in der Polymerisationsmischung suspendierter wasserfreier Bleicherde durchgeführt werden. Vorteilhafte Ergebnisse werden erzielt, wenn man sie, bezogen auf den gesamten Polymerisationsansatz in einer Menge von 1 bis 20 Gew.%, vorzugsweise 5 bis 10 Gew.%, einsetzt. Natürlich können auch grössere und kleinere Mengen verwendet werden.

Die suspendierten Bleicherden können durch gebräuchliche physikalische Trennmethoden, wie z. B. Filtrieren oder Zentrifugieren, aus der Polymerisationsmischung abgetrennt und erneut für eine beliebige Anzahl weiterer Polymerisationen verwendet werden. Diese Abtrennung macht jedoch einen kostspieligen technischen Aufwand erforderlich und führt gelegentlich zu verfärbten Copolymerisaten, wenn bei der Katalysatorabtrennung und -Rückführung die Atmosphäre nicht vollständig ausgeschlossen werden kann. Durch Einwirkung atmosphärischer Feuchtigkeit kann der Katalysator zudem inaktiviert werden.

Nach einer bevorzugten Ausführungsform wird daher die im wesentlichen wasserfreie Bleicherde als Formkörper verpreßt in einem festen Katalysatorbett angeordnet und mit der Copolymerisationsmischung in Kontakt gebracht oder insbesondere in einem Röhrenreaktor fest angeordnet und von der Copolymerisationsmischung durchströmt.

Zur Herstellung der Katalysatorformkörper werden die handelsüblichen wasserhaltigen Bleicherden mit Bindemitteln, insbesondere Wasser, verknetet und zu Formkörpern verpreßt. Anschließend werden die wasserhaltigen Formkörper oberhalb 100 °C, vorzugsweise bei Temperaturen von 150 bis 700 °C, bei Normaldruck oder unter vermindertem Druck, gegebenenfalls in Gegenwart von unter den Reaktionsbedingungen inerten Gasen, z. B. Edelgasen, wie Helium oder Argon, oder insbesondere Stickstoff auf die obengenannten Wassergehalte entwässert.

Die verpreßten Bleicherden können beispielsweise die Form von Kugeln, Ringen, Zylindern oder Tabletten aufweisen. Bei Verwendung von kugelförmigen Bleicherdeformkörpern weisen die Kugeln im allgemeinen Durchmesser von 2 bis 15 mm, vorzugsweise 3 bis 6 mm auf. Als zylinderförmige Formkörper werden im allgemeinen Zylinder mit einer Länge von 2 bis 15 mm und einem Durchmesser von 2 bis 6 mm verwendet. Nicht kugel- oder zylinderförmige Formkörper weisen im allgemeinen ein Volumen auf, das dem der zylinderförmigen Formkörper entspricht.

Die trockenen Bleicherde-Formkörper werden in einem Reaktionsgefäß, beispielsweise einem Röhren- oder Schachtofen, aufgeschüttet. Die gewählte Dimension der Katalysatorschüttung wird vorzugsweise von der Möglichkeit bestimmt, die Polymerisationswärme abzuführen.

Die Reaktionsgefäße, die im allgemeinen säulenförmig sind, können einen Querschnitt in beliebiger Form, beispielsweise in Form eines Quadrates oder einer Ellipse, aufweisen. Vorzugsweise verwendet man jedoch langgestreckte, zylinderförmige Reaktionsgefäße. Das Verhältnis von Innendurchmesser zu Länge des Reaktionsgefäßes beträgt im allgemeinen 1 : 2 bis 1 : 100, vorzugsweise 1 : 10 bis 1 : 40. Die Reaktionsgefäße können senkrecht oder waagrecht ausgerichtet sein und auch Zwischenlagen einnehmen. Vorzugsweise verwendet werden jedoch senkrecht stehende Röhrenofen, bei denen der Rohrdurchmesser etwa 10 bis 100 mm beträgt. Legt man weniger Wert auf eine genaue Temperaturführung bei der Polymerisation, so können als Reaktionsgefäß auch einfache Schachtöfen mit oder ohne Produktrückführung eingesetzt werden.

Überraschenderweise zeigte sich, daß zu Formkörpern verpreßte und oberhalb 100 °C getrockneten Bleicherden, die in ein stationäres, fest angeordnetes Katalysatorbett eingebracht werden, durch die zu polymerisierende Mischung aus Tetrahydrofuran, 1,2-Alkylenoxid und Carbonsäureanhydrid nicht zerstört werden, sondern über ungewöhnlich lange Zeiträume, beispielsweise von mehr als 1 Jahr, ihre ursprüngliche feste Form erhalten und keinerlei Abrieb zeigen. Außerdem ist das, das Katalysatorbett verlassende Endprodukt praktisch frei von anorganischen Verunreinigungen. Eine kontinuierliche Verfahrensdurchführung wird dadurch sehr einfach, so daß man streng reproduzierbar — insbesondere hinsichtlich der Farbe und des Polymerisationsgrades — Polyoxybutylen-polyoxyalkylenglykolcarbonsäurediester herstellen kann. Da ferner der Katalysatorverlust vernachlässigbar gering ist, ist das Verfahren besonders umweltfreundlich.

Mit Hilfe des erfindungsgemäßen Copolymerisationsverfahrens können Carbonsäurediester von Polyoxybutylen-polyoxyalkylenglykolen mit beliebigen Polymerisationsgraden, beispielsweise von 2 bis 200, vorzugsweise von 10 bis 70, hergestellt werden, die nach der Hydrolyse Polyoxybutylen-polyoxyalkylenglykole mit mittleren Molekulargewichten von ungefähr 130 bis 15 000, vorzugsweise von 500 bis 3 500, ergeben. Der Polymerisationsgrad wird im wesentlichen bestimmt durch die Carbonsäureanhydrid-Konzentration in der Polymerisationsmischung. Je niedriger die Carbonsäureanhydrid-Konzentration gewählt wird, umso höhere Molekulargewichte werden erreicht und umgekehrt. Da die Polymerisationsgrade auch von den Eigenschaften der im wesentlichen wasserfreien Bleicherden bestimmt werden, ist es im allgemeinen erforderlich, für eine bestimmte Bleicherde und eine gewählte Temperatur die Säureanhydrid-Konzentration zu ermitteln, die das gewünschte Molekulargewicht ergibt. Auch das Monomeren-Verhältnis von Tetrahydrofuran zu 1,2-Alkylenoxid beeinflußt das Molekulargewicht. Da die Art der verwendeten im wesentlichen wasserfreien Bleicherde jedoch einen geringeren Einfluß auf das Molekulargewicht hat, als das Molverhältnis von Tetrahydrofuran zu 1,2-Alkylenoxid, das in der copolymerisierbaren Monomerenmischung

vorteilhafterweise 1 : 1 bis 20 : 1, vorzugsweise 2 : 1 bis 10 : 1 beträgt, und die Carbonsäureanhydrid-Konzentration soll hier als Orientierung beispielsweise folgender Wert angegeben werden : Aus einer für die Polymerisation vorgesehenen Lösung von 14 Mol.% Ethylenoxid, 83 Mol.% Tetrahydrofuran und 3 Mol.% Essigsäureanhydrid erhält man bei der Polymerisationstemperatur von 35° ein Mischpolymerisat mit dem Molekulargewicht von 1 500. Verdoppelt man die Anhydrid-Konzentration und hält das Verhältnis der Monomeren konstant, so entsteht bei derselben Reaktionstemperatur ein Polymerisat mit dem Molekulargewicht von etwa 1 000.

Zur Durchführung der Copolymerisation im Katalysatorfestbett werden im wesentlichen wasserfreie Bleicherdeformkörper enthaltende Reaktionsgefäße mit einer Mischung aus Tetrahydrofuran, 1,2-Alkylenoxid oder -mischungen und Carbonsäureanhydrid nach bekannten Reaktionsmethoden, beispielsweise nach der Riesel- oder Sumpffahrweise, in Kontakt gebracht. Bevorzugt wird die Sumpffahrweise, bei der das gesamte Katalysatorvolumen in Abwesenheit einer Gasphase von der Polymerisationsmischung aus den genannten 3 Komponenten durchströmt wird. Die Polymerisationswärme kann durch geeignet angebrachte Kühlaggregate im Polymerisationsturm oder mittels eines im Parallelschluß betriebenen, außen liegenden Kühlers abgeführt werden.

Die Copolymerisation wird zweckmäßigerweise in einem fest angeordneten Katalysatorbett bei Temperaturen von 20 bis 70 °C, vorzugsweise von 35 bis 64 °C bei Normaldruck durchgeführt. Bei Anwendung von Druck kann die Copolymerisationstemperatur auch höher liegen. Copolymerisationsmischungen mit einem hohen Ethylenoxidanteil werden zweckmäßigerweise unter erhöhtem Druck copolymerisiert. Die Verweilzeiten betragen üblicherweise 5 bis 50 Stunden, vorzugsweise 8 bis 30 Stunden.

Die das Reaktionsgefäß verlassende Reaktionsmischung enthält neben den erfindungsgemäßen Carbonsäurediestern der Polyoxybutylen-polyoxyalkylenglykole, je nach den angewandten Reaktionsbedingungen beispielsweise in Abhängigkeit von der Katalysatoraktivität, der Verweilzeit am Katalysator und der Reaktionstemperatur, 30 bis 60 Gew.% nicht umgesetztes Tetrahydrofuran und maximal 10 Gew.%, vorzugsweise weniger als 3 Gew.% nicht umgesetztes Carbonsäureanhydrid, die durch eine einfache Destillation, gegebenenfalls unter vermindertem Druck, abgetrennt und gegebenenfalls rückgeführt werden können. Hingegen wird das eingesetzte 1,2-Alkylenoxid vollständig in den Polyoxybutylen-polyoxyalkylenglykolcarbonsäurediester einpolymerisiert.

Die nach dem erfindungsgemäßen Verfahren hergestellten Polyoxybutylen-polyoxyalkylenglykolcarbonsäurediester können in an sich bekannter Weise durch Verseifung, beispielsweise mit Calciumoxid und/oder -hydroxid als Katalysator, oder vorzugsweise durch Umesterung, beispielsweise mit Methanol analog den Angaben der US-PS 2 499 725 oder gemäß Journal of American Chemical Society, Vol. 70, Seite 1842 in die entsprechenden Glykole übergeführt werden.

Die erhaltenen Polyoxybutylen-polyoxyalkylenglykole, insbesondere solche mit Molekulargewichten von 500 bis 3 000, eignen sich vorzüglich zur Herstellung von Polyurethanen oder Polyestern. Sie verleihen beispielsweise den Polyurethanen ein sehr hohes mechanisches Eigenschaftsniveau. Im Vergleich zu Polytetramethylenetherglykolen besitzen sie einen niedrigen Erstarrungspunkt und können daher vorwiegend in flüssiger Form verarbeitet werden, ohne daß zuvor kostspielige Verflüssigungs- oder Schmelzprozesse durchgeführt werden müssen.

Die folgenden Beispiele sollen das erfindungsgemäße Verfahren näher erläutern. Die genannten Teile sind Gewichtsteile ; sie verhalten sich zu Volumenteilen wie Kilogramm zu Litern.

Beispiel 1

Ein marktgängiges technisches Tetrahydrofuran wurde gemäß den Angaben der EP-OS 3112 durch Behandlung mit einer käuflichen Bleicherde (RTonsil Optimum FF, Süd-Chemie AG, München) gereinigt und für die Copolymerisation verwendet.

Strangpreßlinge mit einem Durchmesser von 2 bis 3 mm und einer durchschnittlichen Länge von 4 mm wurden aus käuflicher Bleicherde (RTonsil Optimum FF der Süd-Chemie AG, München) hergestellt und 4 Stunden bei 200 °C getrocknet.

Ein mit einem thermostatiertem Kühlmantel versehenes Reaktionsrohr mit einem Volumen von 1 000 Volumenteilen und einem Verhältnis von Durchmesser zu Länge von ungefähr 5 : 70 wurde mit den obenbeschriebenen getrockneten Strangpreßlingen gefüllt. Durch das Reaktionsrohr pumpte man bei 35 °C in Abwesenheit einer Gasphase von unten nach oben eine Mischung, die aus 2 000 Gew.-Teilen (27,75 Mol) Tetrahydrofuran, 126 Gew.-Teilen Essigsäureanhydrid und 223 Gew.-Teilen (5 Mol) Ethylenoxid hergestellt wurde, mit einer Geschwindigkeit von 1 000 Volumenteilen in der Stunde derart hindurch, daß die das Reaktionsgefäß verlassende Mischung in die Vorlage der Kreislaufpumpe gefördert wurde. Diese Versuchsanordnung blieb 60 Stunden in Betrieb. Die Verweilzeit am Katalysator lag bei ca. 24 Stunden. Trennte man aus dem Reaktionsgemisch durch Destillation im Vakuum die flüchtigen Anteile (34 Gew.-%) ab, so erhielt man ein flüssiges Polyoxybutylen-polyoxyethylenglykoldiacetat mit einer Esterzahl von 71 mg KOH/g. Daraus errechnete sich das Molekulargewicht zu 1 580. Durch Umesterung mit Methanol in Gegenwart von 0,01 Gew.% Natriummethylat wurde ein Polyoxybutylen-polyoxyethylenglykol mit einem Molekulargewicht von 1 500 erhalten. Aus der analytischen Untersuchung der flüchtigen Anteile des erhaltenen Reaktionsgemisches ergab sich, daß das Ethylenoxid vollständig in das Polyoxybutylen-polyoxyethylenglykoldiacetat einpolymerisiert wurde. Das Destillat bestand nämlich zu 99 Gew.% aus Tetrahydrofuran und zu 1 Gew.% aus Essigsäureanhydrid.

Beispiel 2

4 mm-Katalysatorkugeln aus Bentonit (Katalysatorkugeln KA 3 der Firma Süd-Chemie AG, München) wurden analog den Angaben im Beispiel 1 getrocknet und in das obengenannte Reaktionsrohr gefüllt. Das Reaktionsrohr wurde danach unter den in Beispiel 1 genannten Reaktionsbedingungen mit einer Mischung aus 2 000 Gew.-Teilen Tetrahydrofuran, 223 Gew.-Teilen Ethylenoxid und 126 Gew.-Teilen Essigsäureanhydrid beschickt. Die Verweilzeit am Katalysator betrug 20 Stunden. Hierbei wurde das Ethylenoxid vollständig in das Polyoxybutylen-polyoxyethylenglykoldiacetat, dessen Molekulargewicht 1 480 betrug, einpolymerisiert. 35 Gew.% des eingesetzten Tetrahydrofurans wurden aus der Reaktionsmischung destillativ zurückgewonnen.

Beispiel 3

Verfuhr man analog den Angaben von Beispiel 1, setzte jedoch eine Polymerisationsmischung aus 83 Mol.% Tetrahydrofuran, 3 Mol.% 1,2-Propylenoxid und 3 Mol.% Essigsäureanhydrid ein, so erhielt man ein Polyoxybutylen-polyoxypropylenglykoldiacetat mit einem Molekulargewicht von 1 555, das das 1,2-Propylenoxid vollständig und 65 Gew.% des eingesetzten Tetrahydrofurans einpolymerisiert enthielt.

**Patentansprüche**

1. Verfahren zur Herstellung von Polyoxybutylen-polyoxyalkylenglykolcarbonsäurediester durch katalytische Copolymerisation von Tetrahydrofuran mit mindestens einem 1,2-Alkylenoxid, dadurch gekennzeichnet, daß man die Copolymerisation in Gegenwart von Carbonsäureanhydrid mit Bleicherde mit einem Wassergehalt von weniger als 3 gew.% als Katalysator durchführt.

2. Verfahren nach Anspruch 1, dadurch gekennzeichnet, daß man als 1,2-Alkylenoxide Ethylenoxid und/oder 1,2-Propylenoxid verwendet.

3. Verfahren nach Anspruch 1, dadurch gekennzeichnet, daß das Molverhältnis von Tetrahydrofuran zu 1,2-Alkylenoxid in der copolymerisierbaren Monomerenmischung 1 : 1 bis 20 : 1 beträgt.

4. Verfahren nach Anspruch 1, dadurch gekennzeichnet, daß man als Carbonsäureanhydrid Acetanhydrid verwendet.

5. Verfahren nach Anspruch 1, dadurch gekennzeichnet, daß die Bleicherde einen Wassergehalt von 0,001 bis 1,5 Gew.% aufweist.

6. Verfahren nach Anspruch 1, dadurch gekennzeichnet, daß die Bleicherde in einem festen Katalysatorbett angeordnet ist und mit einer Mischung aus Tetrahydrofuran, 1,2-Alkylenoxid und Carbonsäureanhydrid in Kontakt gebracht wird.

7. Verfahren nach Anspruch 1, dadurch gekennzeichnet, daß die Bleicherde in einem Röhrenreaktor fest angeordnet ist und von einer Mischung aus Tetrahydrofuran, 1,2-Alkylenoxid und Carbonsäureanhydrid durchströmt wird.

8. Verfahren nach Anspruch 1, dadurch gekennzeichnet, daß die Copolymerisation bei einer Reaktionstemperatur von 20 bis 70 °C unter Normaldruck durchgeführt wird.

9. Verfahren nach Anspruch 1, dadurch gekennzeichnet, daß der Wassergehalt der Mischung aus Tetrahydrofuran und 1,2-Alkylenoxid weniger als 0,2 Gew.% beträgt.

10. Verfahren nach Anspruch 1, dadurch gekennzeichnet, daß die Bleicherde mit einem Wassergehalt von 0,001 bis 1,5 Gew.% in einem Röhrenreaktor fest angeordnet ist und von einer Mischung aus Tetrahydrofuran, Ethylenoxid und/oder 1,2-Propylenoxid und Acetanhydrid durchströmt wird.

## Claims

1. A process for the preparation of polyoxybutylene-polyoxyalkylene glycol carboxylic acid diesters by catalytic copolymerization of tetrahydrofuran with at least one 1,2-alkylene oxide, wherein the copolymerization is carried out in the presence of a carboxylic anhydride using a bleaching earth having a water content of less than 3 % by weight as catalyst.

2. A process as claimed in claim 1, wherein ethylene oxide and/or 1,2-propylene oxide is used as the 1,2-alkylene oxide.

3. A process as claimed in claim 1, wherein the molar ratio of tetrahydrofuran to 1,2-alkylene oxide in the copolymerizable monomer mixture is from 1 : 1 to 20 : 1.

4. A process as claimed in claim 1, wherein acetic anhydride is used as the carboxylic anhydride.

5. A process as claimed in claim 1, wherein the bleaching earth has a water content of from 0.001 to 1,5 % by weight.

6. A process as claimed in claim 1, wherein the bleaching earth is arranged in the form of a fixed bed of catalyst, and is brought into contact with a mixture of tetrahydrofuran, 1,2-alkylene oxide and carboxylic anhydride.

7. A process as claimed in claim 1, wherein the bleaching earth is arranged in the form of a fixed bed in a tubular reactor, and a mixture of tetrahydrofuran, 1,2-alkylene oxide and carboxylic anhydride flows therethrough.

8. A process as claimed in claim 1, wherein the copolymerization is carried out at a temperature of from 20 to 70 °C under atmospheric pressure.

9. A process as claimed in claim 1, wherein the water content of the mixture of tetrahydrofuran and 1,2-alkylene oxide is less than 0,2 % by weight.

10. A process as claimed in claim 1, wherein the bleaching earth having a water content of from 0.001 to 1,5 % by weight is arranged in the form of a fixed bed in a tubular reactor, and a mixture of tetrahydrofuran, ethylene oxide and/or 1,2-propylene oxide and acetic anhydride flows therethrough.

## Revendications

1. Procédé de préparation de diesters d'acides polyoxybutylène-polyoxyalkylèneglycol carboxyliques par copolymérisation catalytique de tétrahydrofuranne avec au moins un 1,2-alkylène-oxyde, caractérisé par le fait que l'on effectue la copolymérisation en présence d'anhydride d'acide carboxylique avec de la terre décolorante d'une teneur en eau inférieure à 3 % en poids, comme catalyseur.

2. Procédé selon la revendication 1, caractérisé par le fait que l'on utilise, comme 1,2-alkylène-oxyde, de l'éthylène-oxyde et/ou du 1,2-propylène-oxyde.

3. Procédé selon la revendication 1, caractérisé par le fait que le rapport molaire du tétrahydrofuranne au 1,2-alkylène-oxyde dans le mélange de monomères copolymérisables est de 1/1 à 20/1.

4. Procédé selon la revendication 1, caractérisé par le fait que l'on utilise, comme anhydride d'acide carboxylique, de l'anhydride acétique.

5. Procédé selon la revendication 1, caractérisé par le fait que la terre décolorante possède une teneur en eau de 0,001 à 1,5 % en poids.

6. Procédé selon la revendication 1, caractérisé par le fait que la terre décolorante est disposée dans un lit fixe de catalyseur et est mise en contact avec un mélange de tétrahydrofuranne, 1,2-alkylène-oxyde et anhydride d'acide carboxylique.

7. Procédé selon la revendication 1, caractérisé par le fait que la terre décolorante est disposée ferme dans un réacteur tubulaire et parcourue par un courant de mélange de tétrahydrofuranne, 1,2-alkylène-oxyde et anhydride d'acide carboxylique.

8. Procédé selon la revendication 1, caractérisé par le fait que la copolymérisation est effectuée sous pression normale à une température de réaction de 20 à 70 °C.

9. Procédé selon la revendication 1, caractérisé par le fait que la teneur en eau du mélange de tétrahydrofuranne et 1,2-alkylène-oxyde est inférieure à 0,2 % en poids.

10. Procédé selon la revendication 1, caractérisé par le fait que la terre décolorante d'une teneur en eau de 0,001 à 1,5 % en poids est disposée ferme dans un réacteur tubulaire et parcourue par un courant de mélange de tétrahydrofuranne, éthylène-oxyde et/ou 1,2-propylène-oxyde et anhydride acétique.